# DEMANDE DE BREVET EUROPEEN

(11) **EP 2 138 963 A1**
(43) Date de publication de la demande: **30.12.2009**
(21) Numéro de dépôt: 08305355.3
(22) Date de dépôt: 27.06.2008
(51) Int. Cl.: G06K 19/077, H01Q 1/22

(54) **Procédé de réalisation d'un dispositif ajustable en épaisseur comportant une antenne de transpondeur radiofréquence et dispositif obtenu**

(71) Demandeur: GEMPLUS, 13420 Gémenos (FR)
(72) Inventeur: Alleysson, Blandine, 13470 Carnoux (FR); Robles, Laurence, 83640 Saint Zacharie (FR); Seban, Frédérick, 13260 Cassis (FR)

(57) **Abrégé**

Procédé de réalisation d'un dispositif 1 ajustable en épaisseur et comportant une antenne de transpondeur radiofréquence (3), ledit procédé comprenant au moins une étape d'assemblage d'une antenne avec au moins un substrat (2H),

Le procédé se distingue en ce qu'il comprend une étape d'assemblage d'au moins une couche d'un matériau de fluage (MF) et/ou de renfort (MR) au substrat, et en ce que ledit substrat est fourni en ayant des propriétés de compressibilité et/ou de porosité tandis que la couche de renfort présente des propriétés de fluage et/ou d'adhésivité de manière à fluer au moins en partie à travers la surface du substrat sous l'effet de la pression et/ou température.

L'invention concerne également le dispositif obtenu.

## Description

L'invention concerne un procédé de réalisation d'un dispositif en couches ou feuilles ajustable en épaisseur et comportant une antenne de transpondeur radiofréquence.

Le dispositif vise à être utilisé en particulier dans la fabrication d'un insert électronique radiofréquence de faible épaisseur et bas coût et présentant de bonnes propriétés de communication notamment de portée.

Un tel insert comporte au moins une antenne sur un substrat destinée à être connectée à un microcircuit; il est destiné notamment à être inséré dans un laminé de feuilles, une couverture de passeport électronique, une carte d'identité, tout produit doté d'une fonction de communication radiofréquence; et de fait son épaisseur doit être très faible.

Les inserts sont destinés à être incorporés dans des produits de différentes épaisseurs. Pour chaque produit, il faut définir une épaisseur spécifique d'insert compatible avec les feuilles supplémentaires de couverture ou finition d'un produit donné tel un passeport ou carte d'identité sans-contact. Cela rend la conception, fabrication de l'insert et l'approvisionnement des couches assez complexe à gérer.

Il est connu d'agir sur la pression et température de laminés de feuilles pour varier légèrement l'épaisseur finale du laminé de quelques pourcents (1 à 10 %) mais cette opération peut s'accompagner d'un agrandissement de la surface de l'insert qu'il faut encore découper par la suite. En outre, une trop forte pression peut endommager le transpondeur (antenne et/ou puce) ou fragiliser l'insert même par rapport à son utilisation à venir et à des efforts de flexion torsion.

Ces ajustements sont toutefois limités pour satisfaire la diversité d'épaisseurs des inserts actuellement demandés sur le marché, de 300µm à 850µm selon les produits.

On connaît un procédé de réalisation d'insert, ledit insert comportant une antenne filaire sur un substrat par la technique de l'incrustation de fil aux ultrasons sur substrat; cette technologie est relativement lente et onéreuse. Par exemple, dans le brevet EP 0880754B1, le fil d'antenne réalisé en fil incrusté dans une feuille polymère survole les plages de contact d'une puce déjà en place ou son emplacement correspondant dans une cavité réalisée avant l'antenne et une connexion est réalisée par soudure notamment thermo compression.
Ce procédé a l'inconvénient d'être lent et onéreux et pour une variante de mise un oeuvre, de nécessiter une cavité préalablement à la réalisation de l'antenne pour le maintien du microcircuit et/ou la compensation d'épaisseur du micro circuit

On connaît également des techniques de réalisation d'antenne par couture ou broderie, par la demande de brevet JP 2002 298110 A, dans lequel un module étant d'abord fixé sur un substrat, l'antenne est fixée ensuite par points de couture sur le substrat. Pour la connexion, le fil s'étend par dessus les plages et vient serrer par contact des plages de contact du module.

Dans le brevet EP 1328899 B1, l'antenne est réalisée à l'aide d'un fil métallique cousu sur une feuille et des pastilles de contact disposées préalablement sur la feuille sont reliées au fil d'antenne. Une puce est reportée sur le substrat et connectée notamment par une liaison par fil soudé "wire bonding" aux pastilles. Cette technique requiert un positionnement préalable contraignant des pastilles et d'enrober les connexions de la puce ultérieurement. La présence du module sur le substrat avant la réalisation de l'antenne, peut être un frein à la cadence de production de l'antenne en grande série.

Le brevet US7059535 B2 décrit un insert pour document d'identification en couches, comprenant un substrat thermoplastique pour positionner une antenne connectée à une unité à puce et deux couches de couverture en matériau poreux en mousse. Le substrat peut comprendre dedans une structure en tissu. Le substrat avec transpondeur complet (antenne, puce et substrat) est laminé entre les deux feuilles de couverture en matériau poreux en mousse de manière que le thermoplastique du substrat pénètre dans les pores du matériau dans un but d'avoir des couches non démontables.

L'invention vise principalement à définir une structure de couches ou feuilles, notamment pour transpondeurs radiofréquence, dont l'épaisseur finale est ajustable de manière assez importante de manière notamment à pouvoir être insérée dans des produits de différentes épaisseurs.

Elle vise aussi une structure de laminé résistante pour éviter que les feuilles soient facilement démontables.

A cet effet, l'invention a pour objet un procédé de réalisation d'un dispositif ajustable en épaisseur et comportant une antenne de transpondeur radiofréquence, ledit procédé comprenant au moins une étape d'assemblage d'une antenne avec au moins un substrat;
Le procédé se distingue en ce qu'il comprend une étape d'assemblage d'au moins une couche d'un matériau de fluage et/ou de renfort au substrat et en ce que ledit substrat est fourni en ayant des propriétés de compressibilité et/ou de porosité tandis que la couche de renfort présente des propriétés de fluage et/ou d'adhésivité de manière à fluer au moins en partie à travers la surface du substrat sous l'effet de la pression et/ou température.

Ainsi, l'invention permet d'une part de définir un seul type d'insert dont l'épaisseur est ajustable puis ajusté et utilisable pour différents produits sans modifier pour autant les couches ou feuilles de départ le constituant ou les couches ou feuilles de recouvrement ou de décoration additionnelles.

La cadence de production d'antenne est optimisée grâce à la technique de broderie ou couture et d'autre part de préparer le support pour qu'il retrouve des propriétés de tenue mécanique classique lui permettant d'être utilisé dans des conditions opératoires classiques requises par les étapes ultérieures de réalisation d'insert électronique.

Selon d'autres caractéristiques du procédé :
- le substrat et la couche sont choisis de manière à permettre une amplitude d'ajustement d'épaisseur en fonction de la pression et/ou température comprise entre 20 à 70 % des épaisseurs cumulées initiales du substrat et de la couche de renfort par déplacement de la matière du substrat et renfort dans le sens de l'épaisseur; Par exemple, différents types d'assemblage peuvent permettre selon les cas respectivement une perte d'épaisseur maximale de 20 % ou 30 % ou 70 %; On peut ainsi avoir une panoplie de couple de matériau et substrat pré-étalonnées pour permettre des ajustements plus ou moins importants selon la variété d'épaisseurs des produits fabriqués.
- le substrat et la couche sont choisis de manière à permettre un ajustement de perte d'épaisseur pouvant s'étendre de 40 à 70 % de leur épaisseur initiale cumulée, conduisant à une bonne absorption du substrat et homogénéité;
- le substrat est un tissu présentant un maillage et un premier degré de porosité au niveau du maillage du tissu, permettant un premier niveau d'ajustement et migration rapide du matériau;
- le tissu comporte des fils composés de multi-filaments présentant un gonflant et un second degré de porosité au niveau inter filament, permettant un second niveau d'ajustement et migration ou absorption plus complète du substrat;
- la couche de renfort thermo adhésive ou thermoplastique est forcée à fluer à travers le substrat à partir d'une face du substrat pour adhérer ou accrocher une seconde couche de recouvrement disposée sur la face opposée du substrat et simplifiant la mise en oeuvre de l'assemblage;
- le substrat est un tissu formé de fils multi-filaments, le diamètre des fils étant au repos compris entre 80 et 150 µm et présentant un maillage au repos compris entre 200 et 550 µm;
- le substrat est un tissu présentant des fils, par exemple, de type mono filament, de 90 µm à 100 µm de diamètre au repos et des maillages ayant 220 à 320 µm de côté;
- le procédé comprend une étape de lamination d'une couche de recouvrement comprenant du papier ou équivalent enduit de matière adhésive disposée au contact du substrat et l'autre couche comprend du Teslin; Ainsi, l'adhésif flue à travers un côté du substrat jusqu'à adhérer à la couche ou feuille positionnée de l'autre côté du substrat.

L'invention a également pour objet un dispositif comportant une antenne de transpondeur radiofréquence ajusté en épaisseur, ledit dispositif comportant un assemblage d'une antenne plane avec au moins un substrat et une couche d'un matériau de fluage et/ou renfort,
Le dispositif se distingue en ce que le substrat possède une structure ayant des propriétés de compressibilité et/ou de porosité et la couche de fluage et/ou renfort ayant fluée à travers au moins une partie de la structure du substrat.

L'invention a également pour objet un objet électronique de communication radiofréquence, tel une carte à puce sans contact, un passeport, un insert, obtenu par le procédé ou comprenant le dispositif ci-dessus.

D'autres particularités et avantages de l'invention apparaîtront à la lecture de la description, qui suit, donnée à titre d'exemple illustratif et non limitatif, et faite en référence aux figures annexées pour lesquelles :
- la figure 1 illustre une vue schématique d'un transpondeur pouvant être obtenu selon un mode de mise en oeuvre du procédé de l'invention;
- la figure 2 illustre un détail de l'antenne de la figure 1 réalisée par broderie sur un substrat tissé;
- la figure 3 illustre une vue partielle en coupe d'un premier mode d'assemblage du dispositif selon l'invention ;
- la figure 4 illustre une vue partielle en coupe un second mode d'assemblage du dispositif selon l'invention ;
- la figure 5 illustre une vue partielle en coupe un troisième mode d'assemblage du dispositif selon l'invention ;
- la figure 6 illustre une vue en coupe d'un dispositif en cours d'assemblage selon mode de réalisation préféré de l'invention avec feuilles de recouvrement;
- les figures 7, 8, 9 illustrent une vue en coupe d'un dispositif conforme à l'invention connecté à un module selon trois modes différents de connexion;
- La figure 10 illustre les étapes du procédé selon différents modes préférés de mise en oeuvre,
- la figure 11 illustre une étape de réalisation d'une pluralité d'antenne sur un substrat et de lamination d'une feuille de renfort sur le substrat;

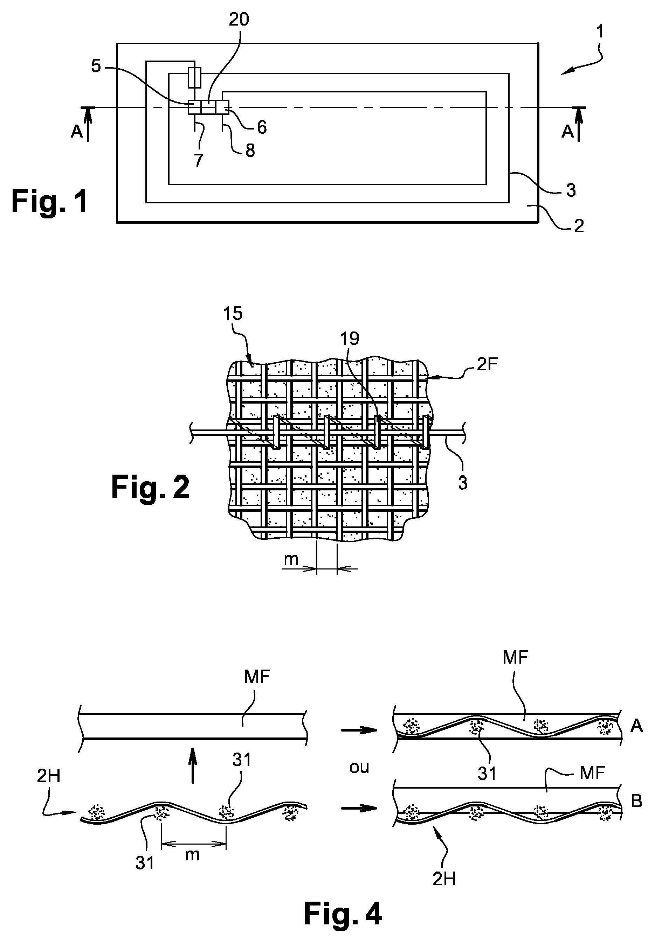

A La figure 1 selon un mode de réalisation de l'invention, un dispositif ajusté en épaisseur conforme à l'invention comporte une antenne (3) de transpondeur radiofréquence munie de deux portions terminales (7, 8),
Au moins une antenne a été assemblée avec au moins un substrat 2 ou 2f et une couche de renfort ou de fluage15; L'antenne a été connectée à un module 20 à des plages de contact 7, 8 d'un module. Le module peut toutefois être une puce nue.

Dans la présente demande une couche de fluage peut aussi être une couche de renfort.

Selon l'invention, on a fourni un substrat 2f ayant des propriétés de compressibilité et/ou de porosité ou perméabilité vis à vis de la couche de renfort à des conditions opératoires décrites ultérieurement.
De multiples couples substrat / matériau de fluage peuvent répondre à cette définition dans la mesure où la perméabilité du substrat est relative par rapport au matériau de fluage. Ainsi par exemple, du papier, un feutre, un tissu, un treillis, une mousse, une structure alvéolaire, etc. pourraient être associés à un thermo-adhésif, un thermodurcissable ou thermoplastique, un polyuréthane, une couche réactive à froid notamment adhésive etc.

Dans l'exemple, le substrat est de préférence un tissu de faible tenue, ajouré présentant un maillage lâche de fils ou de fibres.

Pour l'assemblage de l'antenne diverses techniques sont envisageables selon la technologie employée de réalisation d'antenne comme par exemple, la gravure, la sérigraphie, le découpage, le jet de matière, l'incrustation ultrasons. L'antenne peut être simplement reportée ou fixée sur un substrat en même temps qu'elle est produite.

A titre d'exemple préféré sur la figure 2, l'antenne 3 est assemblée par une technique filaire notamment broderie ou couture ou équivalent sur un substrat ou support souple comportant un tissu 2f à l'aide d'un fil de broderie 19 isolant. La matière du substrat est choisie assez souple de manière qu'elle n'est pas un frein à la pénétration de l'aiguille de broderie ou couture dans la matière et donc un frein aux cadences de couture ou broderie; Le support est souple dans la mesure où il n'a pas de tenue, de rigidité comme tous les tissus fins. Le maillage (m) lâche entre des fils de chaine et/ou trame est par exemple compris entre 200 µm et 300 µm dans les deux sens en fil polyester de 48 dtex ou 80µm d'épaisseur au repos.

Le substrat n'est pas stable dimensionnellement dans la mesure où il peut s'étirer normalement à la main notamment en diagonale par exemple au moins de 3 % à 20 %. Cette élongation est par exemple inférieure à 2 % dans le sens du défilement du substrat sens chaine ou trame en production.

Le substrat présente un premier degré de porosité ou perméabilité dit macroscopique ou de premier degré du fait de son maillage grâce à un espacement (m) des fils ou fibres dans le sens chaîne et trame.

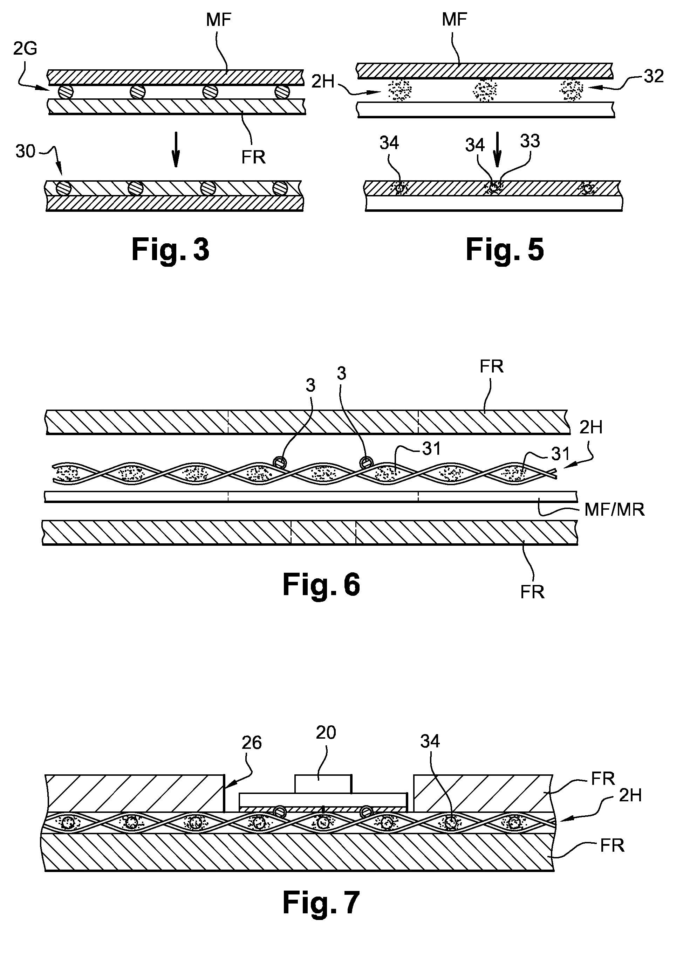

A la figure 3, les fils sont de type mono filament et on effectue une lamination du substrat 2G avec un matériau de fluage MF ou renfort MR et une feuille de recouvrement FR, dans l'exemple un thermo-adhésif de même épaisseur (80 µm). On obtient un dispositif laminé 30 dans lequel les fils sont entièrement absorbés et entourés avec une épaisseur résultante d'environ 90 µm. La perte d'épaisseur est de l'ordre de 45 - 50 % par rapport à l'épaisseur totale initiale selon le taux de compressibilité du thermo-adhésif qui peut être de 10 % dans les conditions habituelles de lamination à chaud du domaine de la carte à puce dont certaines sont indiquées dans le tableau.

A la figure 4, les fils du tissu 2H sont des fils 31 multi-filaments présentant un second degré de porosité ou perméabilité à leur niveau inter-filaments.
Selon l'amplitude de la compression de lamination, on peut obtenir soit une absorption totale du tissu, cas A, soit une absorption partielle au cas B, par une lamination du substrat seul et du matériau de fluage MF.

Dans le cas A, le substrat étant un tissu de 20 µm d'épaisseur au repos composé de fils mono filament et la couche étant un thermo adhésif en feuille de même épaisseur, il en résulte après lamination à 80 °c sous une pression de 100 N/cm2 une absorption totale du tissu dans l'adhésif qui peut s'épaissir dans l'absorption. La perte d'épaisseur totale est ici de l'ordre de 40 - 50 % sachant qu'il y a environ 10 % de volume de matière du substrat sous forme de tissu.

Dans le cas B, la presse est calibrée pour enfoncer le tissu 2H à moitié dans l'adhésif, la perte d'épaisseur devient donc de l'ordre de 20-25 %.

A la figure 5, le tissu 2H est composé de fils multi-filaments comme précédemment et laminé entre une feuille de matériau thermo-adhésif MF apte à fluer plus facilement qu'une feuille de recouvrement FR. La pression de lamination est maintenue plus forte que dans le cas A de la figure 4 de manière à faire pénétrer la matière MF au moins partiellement dans l'espace inter-filaments 33 et non dans l'espace central 34. On peut aussi augmenter la fluidité de l'adhésif avec la température pour une meilleure pénétration.

La capacité de migration est plus importante que précédemment pour un même maillage et diamètre de fils du fait d'un degré de porosité ou gradient de porosité caractérisant le substrat entre les degrés de perméabilité ou porosité macroscopique et microscopique ci-dessus.

Des gradients de porosité peuvent être obtenus avec d'autres matériaux comme le papier, le feutre ou combinaison de matériaux.

Des degrés différents d'absorption du substrat dans le matériau ou vice versa peuvent être obtenus avec des matériaux ayant une porosité homogène simplement en jouant sur la pression et température ou autre moyen permettant de faire fluer ou rendre le matériau plus fluide, notamment adjonction chimique, diluant...

A la figure 6, pour la réalisation d'un insert, le substrat est de préférence un tissu formé de fils multi-filaments 2H, Le tissu a une épaisseur comprise entre 80 µm et 300 µm au repos et présente un maillage (m) compris entre 200 et 550 µm ou de préférence entre 220 à 320 µm. Les fils présentent 48 à 76 dtex ou un diamètre au repos de 80 à 150 µm ou de préférence entre 90 et 100 µm.

Pour du polycarbonate comme matériau de fluage, il a été observé que les mailles d'un tissu ayant 80 µm d'épaisseur doivent avoir, de préférence, une surface supérieure à 160 x160 µm2, comme par exemple 220 x 220 µm2, pour permettre une lamination et fluage dans des conditions normales dans le domaine de la carte à puce ou par exemple celles décrites dans la demande, de préférence inférieur à 250 °C.

Le tissu 2H comporte des fils composés de multi-filaments et présente un gonflant de préférence naturel et un second degré de porosité au niveau inter filaments; Le tissu peut être en fibre non thermoplastique telle que fibre naturelle, en coton, laine, lin ou en fibre technique tel que carbone, aramide ou équivalent; Cela a l'avantage de conserver de la tenue avec la température contrairement à des tissus thermo plastiques qui ne sont pas exclus de l'invention pour autant.

L'antenne est réalisée par un fil conducteur rapporté sur le tissu par couture ou broderie ou équivalent avec ses deux portions terminales (7, 8).

Les choix d'une perméabilité macroscopique au niveau des mailles et d'une perméabilité microscopique au niveau des fils multi-filaments, permet de régler le taux de pénétration ou migration du renfort dans le substrat et donc de une certaine capacité d'absorption du substrat dans le renfort et de déterminer ainsi l'épaisseur finale du laminé pour une compression maximale.

De même, un gonflant spécifique des filaments, leur nombre, la nature du renfort déterminant notamment son aptitude à fluer avec la température, le choix de la température et la pression, on peut régler une diminution d'épaisseur appropriée.

L'assemblage ainsi réalisé par interpénétration assure non seulement une bonne tenue dimensionnelle de l'assemblage mais aussi une indémontabilité de la structure, du fait notamment d'une pénétration à deux degrés notamment inter-filaments.

Pour améliorer la résistance au démontage d'une feuille ou plusieurs par rapport au substrat, le substrat est laminé directement entre deux feuilles de matériau de fluages notamment du polycarbonate PC qui a l'avantage de se souder ou fusionner au cours d'une lamination.
Les conditions de température et pression figurant au tableau ci-dessous permettent de faire fluer le Teslin à travers des mailles présentant une surface suffisante. Il a été observé qu'un tissu de 80µm d'épaisseur présentant des mailles carrées ou équivalent en surface de 160 µm de côté, ne permettait pas au Teslin de fluer correctement et de fusionner avec l'autre feuille.
D'autre part, l'usage d'un tissu aussi fin (80 µm) avec des mailles plus importantes que 160 µm ne permettait pas de réaliser l'antenne par broderie notamment par manque de matière d'accrochage du fil d'antenne ou trop d'absence de tenue. De préférence, pour une bonne mise en oeuvre du procédé de l'invention, le tissu retenu avec les paramètres définis ci-dessus, a une épaisseur plus importante que 80 µm notamment 100 µm.

De manière surprenante, l'usage d'un tissu disposé à l'interface de deux feuilles plastiques telles le PC, ne favorise pas la délamination ou pelage des feuilles contrairement à ce que l'homme de l'art pourrait le penser. Grâce à l'invention, le choix du substrat adéquat permettant un fluage suffisant permet que les deux feuilles se soudent à travers le substrat.

L'assemblage peut être réalisé de préférence comme au cas B de la figure 4 de manière que le substrat soit réparti, (de préférence à égalité), entre deux feuilles et s'étende le plus possible, par exemple dans 20 %, 40 %, 50 %, 80 %, 100 % d'une feuille de dessus et de dessous de manière à renforcer et rendre une délamination éventuelle plus difficile. On obtient un matériau type composite dans lequel le substrat s'étend dans chaque feuille ou couche que l'on souhaite solidariser le mieux possible ave une autre feuille. Le cas échéant, un laminé composé de plusieurs feuilles peut contenir un substrat perméable disposé à chaque interface formée entre les différentes feuilles ou du moins aux interfaces dont on souhaite éviter une délamination frauduleuse.

Le substrat est absorbé par le renfort MR/MF et la perte d'épaisseur est sensiblement au moins égale à celle du substrat ou plus si le renfort est compressible, poreux ou perméable comme le thermoplastique de la marque "teslin". Par contre une feuille de polycarbonate d'épaisseur de 865 µm ne perd que 10 % sous 180°C à 100 N/cm2.
Comme indiqué dans un mode de mise en oeuvre préféré, le dispositif comporte donc, dans un stade intermédiaire, l'antenne sur un substrat souple en tissu ou équivalent apte à être brodé ou cousu facilement à cadence la plus élevée permise par un banc de couture ou de broderie comportant par exemple des dizaines de têtes de broderie ou couture. Comme le maniement du tissu, support d'une antenne brodée, étant très délicat (matériau tissé souple et poreux) pour le stabiliser, le dispositif comprend un matériau de fluage et/ou renfort MF/MR sous forme de feuille ou couche sur une face du substrat opposée à celle portant les portions terminales 7, 8; Le renfort est effectué de préférence après la réalisation de l'antenne. Mais il n'est pas exclu d'adjoindre un léger renfort avant d'assembler l'antenne.
Le renfort présente des propriétés de fluage et/ou d'adhésivité de manière à fluer à travers au moins une partie du substrat sous l'effet de la pression et/ou température.

En particulier, le renfort peut être un adhésif de 20 µm d'épaisseur; le substrat peut être un tissu de même épaisseur ou plus, par exemple de 80 µm à 300 µm au repos.

Le renfort peut être un thermo-adhésif ou thermoplastique tel le "Teslin" équivalent et être lui même perméable ou poreux ou être constitué d'un réseau compressible ou déformable.

De préférence, avant d'être mis contre le substrat, l'adhésif est d'abord joint ou enduit à un matériau de couverture ou recouvrement qui sera ensuite assemblé contre le substrat par l'intermédiaire de l'adhésif.

Le matériau de recouvrement peut aussi servir de matériau stabilisant ou de renfort, tel qu'un matériau thermoplastique : polychlorure de vinyle (PVC), polycarbonate (PC), polyesters (ex : PET), PE chargé silice ; ou polyuréthane ; ou papier ; ou papier synthétique, renforçant le tissu.

De préférence, le substrat et la couche et les feuilles de recouvrement sont choisis de manière à permettre une amplitude d'ajustement d'épaisseur en fonction de la pression et/ou température comprise entre 20 % à 70 % des épaisseurs cumulées initiales du substrat et de la couche de renfort par déplacement de la matière du substrat et de celle du renfort essentiellement dans le sens de l'épaisseur; Par exemple, différentes sélections d'assemblages et couples de matériaux (de fluage et substrat) peuvent permettre selon les cas respectivement une perte d'épaisseur maximale de 20 % ou de 30 % ou de 70 %.

De préférence pour avoir une meilleure homogénéité, le substrat et la couche sont choisis de manière à permettre un ajustement de perte d'épaisseur pouvant s'étendre de 40 à 70 % de leur épaisseur initiale cumulée. Avant 40 % la migration peut n'être que partielle et le substrat peut ne pas être suffisamment stabilisé dimensionnellement en épaisseur.

Une couche de renfort est adjointe ou enduite à au moins une première couche de recouvrement. La couche de renfort thermo adhésive ou thermoplastique ou même un adhésif à froid pâteux ou liquide est forcée à fluer à travers le substrat à partir d'une face du substrat pour adhérer ou accrocher une seconde couche de recouvrement disposée sur la face opposée du substrat.

Différentes combinaisons des feuilles de recouvrement sont possibles tels que par exemple deux feuilles externes de Teslin, deux feuilles externes de papier et une feuille de papier et Teslin respectivement de part et d'autre.
On peut utiliser deux feuilles de recouvrement FR qui sont mixtes Teslin/papier le papier étant à l'extérieur ou l'inverse selon la porosité de l'un ou de l'autre ou l'usage du produit contenant l'insert ou pour un meilleur accrochage à l'adhésif. Pour éviter un effet de tuilage, la disposition des feuilles de recouvrement peut être symétrique l'une par rapport à l'autre pour compenser le tuilage.
Des perforations en pointillées dans les différentes feuilles peuvent le cas échéant être réalisées avant ou après l'assemblage comme indiqué ci-dessous.

A la figure 7, le dispositif comporte de préférence une cavité 26 permettant de loger un composant au moins en partie et de limiter ainsi l'épaisseur totale résultante. La cavité est avantageusement réalisée par usinage notamment poinçonnage dans la feuille de recouvrement préalablement à son assemblage ou après et sur l'une et/ou l'autre feuille.
Toutefois, une découpe préalable dans un substrat non stable dimensionnellement serait difficile à positionner ou indexer.

Le cas échéant, si le tissu est très lâche et les matériaux très malléables, la cavité peut être réalisée par emboutissage en compressant la matière avec un outil ou en reportant directement le module.

Dans d'autres cas, la cavité peut être préétablie dans le matériau de renfort notamment si le substrat n'est pas trop instable dimensionnellement pour caler les portions terminales dans la cavité ou à proximité. Dans ce cas, le renfort avec trous en pointillé sur la figure 6 peut être indifféremment placé ou non contre la surface portant l'antenne.

Ceci dit, vu la finesse ou perméabilité du substrat, il peut être déterminant de retenir un côté spécifique pour fixer le renfort. De préférence, le renfort sans cavité est disposé sur le côté opposé portant des portions terminales d'antenne d'autant plus s'il est beaucoup plus épais.
Le module est logé dans la cavité 16 et fixé aux extrémités d'antenne 7, 8 par thermo-compression.

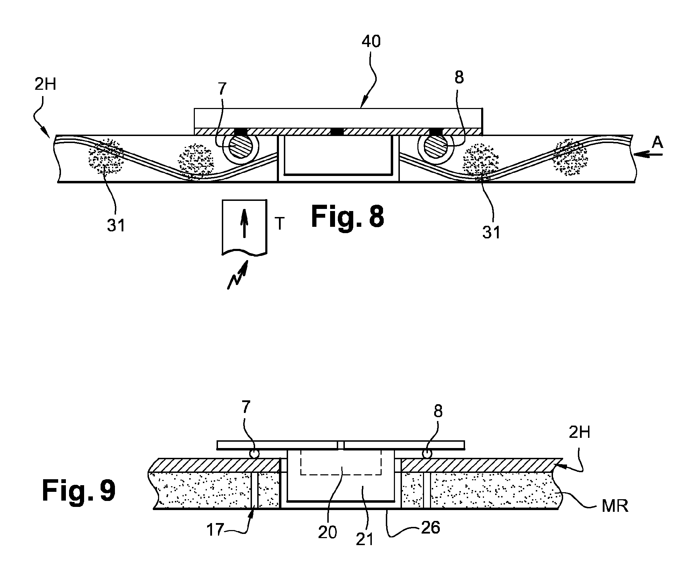

A la figure 8, le module 40 est fixé directement sur un laminé de type A (ou comme la figure 5) après que le substrat soit renforcé avec un matériau de fluage MF ayant absorbé totalement le substrat et l'antenne, les portions terminales étant apparentes en surface.
Une thermo-compression normale peut être réalisée par l'outil T de thermo compression ou à ultrasons venant appuyer sur le fil d'antenne.

A la figure 9, le dispositif comprend un module connecté à l'antenne. II peut comporter des perforations 17 éventuellement au moins partiellement refermées, résultant d'un procédé préféré de connexion décrit ultérieurement. La puce 20 avec ou sans enrobage 21 est introduite au moins partiellement dans la cavité 26. Ici, le matériau de renfort absorbe que très faiblement le substrat ou pas du tout de manière à augmenter l'épaisseur finale de l'insert. La cavité à été réalisée après assemblage avec le renfort.
En référence aux figures 6, 7, 8, 10, 11 on va décrire maintenant un mode de mise en oeuvre préféré du procédé de l'invention permettant de satisfaire les objectifs, mais en présentant au préalable les difficultés rencontrées.

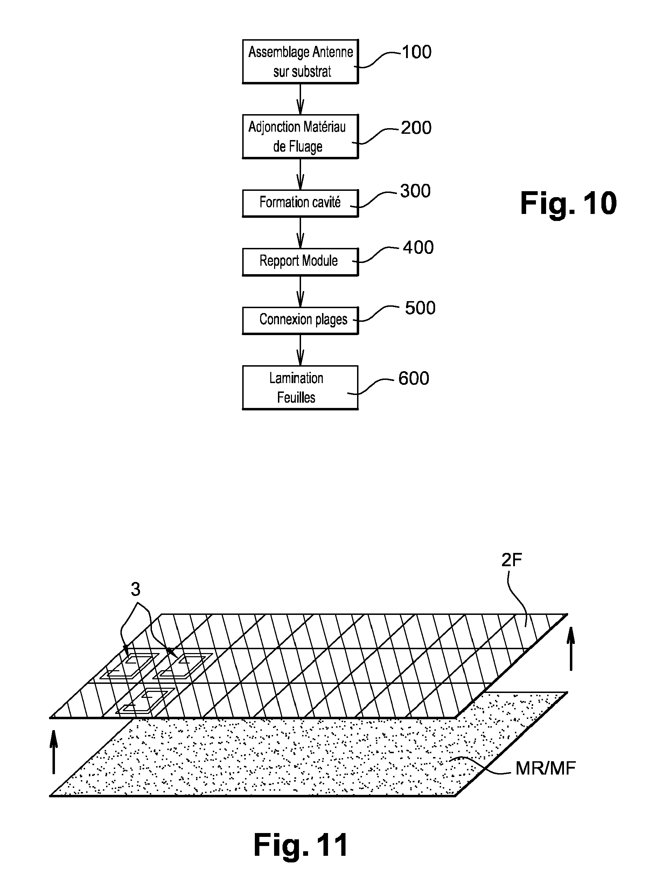

Le procédé est décrit ci-après en relation avec la figure 10. A l'étape 100, comprend une étape d'assemblage de l'antenne avec deux portions terminales sur un substrat par une technique de couture ou broderie. Plusieurs antennes sont réalisées en même temps comme illustré à la figure 13.

Le fil d'antenne 3, 7, 8 peut comporter au moins un revêtement isolant sur toute sa surface; Le fil d'antenne est fixé sur le substrat à l'aide d'un fil non conducteur 19, dit fil de broderie ou de couture.

De préférence, le fil non conducteur est thermo fusible ou thermoplastique pour permettre leur retrait ou élimination ou fusion au niveau de la zone de soudure.

La réalisation de l'antenne en broderie peut comprendre de préférence une étape de réalisation d'un point d'arrêt (non représenté) de fil d'antenne de couture, de broderie, tricotage en bout de l'une au moins des dites portions terminales et une étape d'élimination dudit point d'arrêt comprenant une élimination de matière du support en regard du point d'arrêt et formation éventuelle d'une cavité. Les portions terminales de l'antenne ou points d'arrêt peuvent être superposés ou réalisées dans une zone du support destinée à être éliminée. En cas d'élimination, d'un point d'arrêt par poinçonnage la portion terminale correspondante s'étend jusqu'au bord d'une cavité.
De préférence, le substrat peut être tout matériau poreux et/ou compressible, fusible, résorbable, dégradable de manière à être éliminé ou le moins gênant pour la suite du procédé. Le substrat sert essentiellement selon un mode préféré à supporter l'antenne et la véhiculer jusqu'au renforcement.
Le cas échéant comme à la figure 9, l'antenne ou portion d'antenne est assemblée sur un substrat perméable 2H ayant déjà été absorbé ou assemble avec un matériau de renfort ou de fluage.

A l'étape 200 ensuite, selon une caractéristique, le procédé comporte une étape selon laquelle on dispose un matériau de renfort ou de fluage (si non déjà effectué) (fig. 13) sous forme de feuille ou couche sur une face du substrat notamment opposée à celle portant les portions terminales. Ce matériau stabilise le manque de tenu du substrat et permet d'anticiper l'épaisseur finale de l'insert..

La couche ou feuille de renfort est disposée directement après réalisation de l'antenne de manière à ne pas gêner la cadence de production d'antennes. Le matériau stabilisant dans l'exemple comprend un thermoplastique poreux connu sous la marque Teslin diffusé notamment sous forme de feuille. L'assemblage peut être réalisé par soudure thermique (fusion des matériaux) ou addition d'un adhésif (en film, liquide) par lamination à chaud ou froid.

Les conditions normales de lamination à chaud pour réaliser des insert notamment avec du teslin ou papier comme feuille de couverture présentent une pression de l'ordre de 140 N/cm2 à 250 N/cm2 et une température de l'ordre de 140°C à 200°C.

Un effet similaire à l'ajout d'une feuille peut être obtenu par imprégnation ou enduction d'une couche ou pulvérisation d'un produit tel un enduit, un apprêt, une résine, une mousse polymère, apte à stabiliser dimensionnellement le substrat.

A l'étape 300, le support étant stabilisé, il est alors possible de le manipuler et d'effectuer des étapes plus classiques, notamment reporter avec plus de facilité des plages de contact sur le substrat.
Cependant, dans un mode préféré (fig. 10) selon une autre caractéristique, on procède à une étape de formation d'une cavité 26 dans le substrat et/ou feuille ou couche de renfort à proximité des portions terminales de connexion de l'antenne de manière à introduire la puce ou module.
La cavité est réalisée par poinçonnage mais, on pourrait envisager un formage par pression ou emboutissage ou autre usinage au moins partiel du substrat. Le cas échéant, le renfort MR et/ou substrat 2H peuvent comporter directement des cavités ou découpes à condition toutefois de maîtriser une indexation de positionnement par rapport à l'antenne.

A l'étape 400, (fig. 12) les plages sont reportées de manière à présenter une surface en regard d'une portion terminale de connexion de l'antenne reposant sur le substrat; Le cas échéant, une puce peut être reportée notamment par puce retournée sur les plages ou sur le substrat ou une plage de contact pour une connexion classique par tout moyen connu, voire même de type à fil soudé.

De préférence, les plages sont déjà connectées à un microcircuit électronique tel une puce; Et le microcircuit est inséré au moins en partie dans la cavité, les plages restant en dehors de la cavité en reposant sur les portions de pistes ou extrémités terminales d'antenne reposant elles-mêmes sur le support comme illustré à la figure 6.

A l'étape 500, (fig. 9) on effectue leur connexion aux portions terminales 8 de l'antenne 3 ; La connexion est réalisée sous forme d'une soudure par apport d'énergie entre les plages 16 et les portions terminales, l'énergie de soudure est appliquée directement sur les plages à l'aide d'une thermode T pour une soudure de type thermo-compression ou d'une sonde à ultra-son pour une soudure aux ultrasons.

Pour la soudure, on utilise de préférence une enclume E qui vient exercer un appui contre l'enfoncement éventuel de la portion terminale 8b de l'antenne dans le support 2F. L'enclume est d'autant plus recommandée que le fil d'antenne a tendance à s'enfoncer dans le substrat de part la finesse du fil et/ou mollesse du substrat et/ou matériau de renfort.

L'enclume E transperce au moins la feuille ou couche de renfort en regard de la portion terminale à connecter de manière que la portion à connecter soit supportée par l'enclume pendant la soudure. La section de l'enclume rectangulaire peut avoir une section rectangulaire ou carrée par exemple comprise entre 0,3 x 1 mm² à 1 x 5 mm²

A cause de la présence des fils non conducteurs 19, selon l'invention, on applique l'outil (thermode) (T) sur la plage métallique 16 ce qui a pour effet de faire fondre le fil de fixation et/ou fil associés passant dessous et ce sans pollution de l'outil de soudage.

D'autres connexions sont possibles comme par exemple, un usinage au moins en surface des fils conducteurs au cas où ils seraient gainés de vernis, puis une connexion par colle conductrice.

A l'étape 600, on assemble le support laminé avec au moins une feuille sur le côté opposé à la feuille de renfort. Les feuilles peuvent par exemple être constituées en matériaux utilisés pour les feuilles ou couverture de passeport ou carte à puce ou autre objet. On procédé ensuite à des découpes au format. Le cas échéant, la découpe peut s'effectuer à d'autres étapes.

La lamination peut être éventuellement être réalisée comme un calandrage dans lequel l'épaisseur en trop est transformée en surface de laminé.

Dans une variante de mise en oeuvre, le renfort peut être le cas échéant être adjoint au substrat avant l'assemblage de l'antenne si l'ensemble est compatible avec la technique d'assemblage d'antenne parmi la gravure, une découpe, la sérigraphie, l'incrustation aux ultrasons...

Le cas échéant, selon une autre variante de mise en oeuvre, les rôles respectifs des constituants sont inversés; c'est notamment le substrat d'antenne qui est apte à fluer tandis que le renfort est compressible, perméable comme dans le brevet US7059535 mais a la différence que soit l'assemblage s'effectue préalablement à la connexion de la puce et/ou le substrat n'est pas thermoplastique ou au moins une couche de recouvrement ou de renfort ne soit pas en mousse comme le teslin; cette dernière peut aussi être perméable comme un tissu, un feutre...par rapport au matériau du substrat qui peut être apte à fluer.

II est clair que l'invention associe les deux propriétés ou aptitudes des matériaux à s'interpénétrer pour préparer ou agir sur l'épaisseur finale de l'insert. Des zones tampons Z de réglage d'épaisseur sont préparées selon le taux d'interpénétration des constituants aux différentes étapes de lamination. Ces zones définissent le taux de fluage ou de remplissage des mailles d'un tissu au niveau macroscopique et niveau de remplissage inter fibres ou multi-filaments.

Grâce à l'invention on crée ainsi une structure armée (tissu plus renfort) dont les interstices ou espaces sont plus ou moins remplis selon le besoin d'épaisseur.

Ainsi, si l'on souhaite avoir une épaisseur finale plus grande de l'insert on va dés le premier assemblage du substrat tissu ou papier ou armature avec un renfort thermoplastique et/ou mousseux effectuer une lamination avec moins de pression de manière à faire moins fluer le matériau de fluage dans le substrat.

Dans l'exemple d'un insert pour carte, le tissu ainsi défini nous permet d'utiliser un matériau PVC de compensation de l'épaisseur du module et deux autres feuilles de couverture PVC pour obtenir au final un insert à la bonne épaisseur avec une très bonne adhésion des couches.
Les résultats suivants ont été obtenus pour les inserts dans lesquels les ajustements ou pertes d'épaisseur sont supérieurs à 10 % voire 20 %. Les fils sont de type Multi filaments en polyester (PES). Les mailles étant carrées, une seule valeur est donnée. L'adhésif est préalablement joint au renfort apte à fluer quand il existe avant d'être joint au substrat. La feuille de recouvrement est disposée à l'opposé de la feuille appelée renfort dans le tableau.

| Substrat | renfort | Feuille recouvrement | Température/press ion | épaisseur |
|---|---|---|---|---|
| Tissus maille 220 µm / épaisseur 120µ | Adhesif 20µ | Teslin 350µ | 140N/cm² 150°C | 370µ |
| Tissu maille 220 µm / épaisseur 120µ | Teslin + adhésif 280µ | Teslin 150µm | 80 N/cm² 150°C | 455µm |
| Tissu maille 220 µm / épaisseur 120µ | Teslin + adhésif 280µ | Teslin 150µm | 110 N/cm² 150°C | 435µm |
| Tissu maille 220 µm / épaisseur 120µ | Teslin + adhésif 280µ | Teslin 150µm | 140 N/cm² 150°C | 420µm |
| Sans substrat | PC 435µ | PC 435µ | 100N/cm² 200°C | 780µm |
| Tissu maille 220 µm /épaisseur 120µ | PC 435µ | PC 435µ | 100N/cm² 180°C | 800µm |

## Revendications

1. Procédé de réalisation d'un dispositif 1 ajustable en épaisseur et comportant une antenne de transpondeur radiofréquence (3), ledit procédé comprenant au moins une étape d'assemblage d'une antenne avec au moins un substrat (2H),
**caractérisé en ce qu'**il comprend une étape d'assemblage d'au moins une couche d'un matériau de fluage (MF) et/ou de renfort (MR) au substrat, et **en ce que** ledit substrat est fourni en ayant des propriétés de compressibilité et/ou de porosité tandis que la couche de renfort présente des propriétés de fluage et/ou d'adhésivité de manière à fluer au moins en partie à travers la surface du substrat sous l'effet de la pression et/ou température.

2. Procédé selon la revendication 1, **caractérisé en ce que** le substrat et la couche sont choisis ensemble de manière à permettre une perte d'épaisseur en fonction de la pression et/ou température, ladite perte pouvant atteindre jusqu'à 70 % des épaisseurs cumulées initiales du substrat et de la couche de renfort par déplacement de la matière du substrat et renfort essentiellement dans le sens de l'épaisseur.

3. Procédé selon la revendication précédente, **caractérisé en ce que** le substrat et la couche sont choisis de manière à permettre une perte d'épaisseur de 20 à 70 % de leur épaisseur initiale.

4. Procédé selon l'une des revendications 1 à 3, **caractérisé en ce que** le substrat est un tissu présentant un maillage (m) et/ou un gonflant et un premier degré de porosité au niveau du maillage du tissu.

5. Procédé selon la revendication 4, **caractérisé en ce que caractérisée en ce que** le tissus comporte des fils composés de multi-filaments (31) et présentant un gonflant et un second degré de porosité au niveau inter filaments.

6. Procédé selon l'une quelconque des revendications 1 à 5, **caractérisé en ce que** la couche de matériau MF est forcée à fluer à travers le substrat (2H, 2G) à partir d'une face du substrat pour adhérer ou accrocher une seconde couche de recouvrement (FR) disposée sur la face opposée du substrat.

7. Procédé selon l'une quelconque des revendications précédentes, **caractérisé en ce que** le substrat est un tissu formé de fils multi-filaments, le diamètre des fils étant au repos compris entre 80 et 150 µm et présentant un maillage au repos compris entre 200 et 550 µm;

8. Procédé selon l'une quelconque des revendications précédentes, **caractérisé en ce que** le substrat est un tissu présentant des fils de 90 µm à 100 µm de diamètre au repos et des maillages ayant 220 à 320 µm de côté;

9. Procédé selon l'une quelconque des revendications précédentes, **caractérisé en ce que** l'antenne est réalisée par un fil conducteur rapporté sur le tissu par couture ou broderie ou équivalent.

10. Procédé selon l'une des revendications précédentes, **caractérisé en ce que** le tissu est en fibre non thermoplastique tel que fibre naturelle en coton, laine, lin ou en fibre technique tel que carbone, aramide ou équivalent.

11. Procédé selon l'une des revendications précédentes, **caractérisé en ce que** le substrat est réparti sensiblement à égalité) entre deux feuilles et s'étende au delà de 10 % d'une feuille de dessus et de dessous de manière à renforcer et solidariser les deux feuilles.

12. Dispositif comportant une antenne de transpondeur radiofréquence ajusté en épaisseur, ledit dispositif comportant un assemblage d'une antenne plane avec au moins un substrat et une couche d'un matériau de fluage et/ou de renfort,
**caractérisé en ce que** le substrat possède une structure ayant des propriétés de compressibilité et/ou de porosité et la couche de renfort ayant fluée à travers au moins une partie de la structure du substrat.

13. Produit électronique de communication radiofréquence, tel une carte à puce sans contact, un passeport, un insert, obtenu par le procédé selon les revendications 1 à 11 ou comprenant le dispositif selon la revendication 12.
